# EUROPÄISCHE PATENTSCHRIFT

(11) **EP 2 123 524 B1**
(45) Veröffentlichungstag und Bekanntmachung des Hinweises auf die Patenterteilung: **27.02.2019**
(21) Anmeldenummer: 09100225.3
(22) Anmeldetag: 06.04.2009
(51) Int. Cl.: B60S 1/38

(54) **Wischblatt**
Wiper blade
Raclette d'essuie-glace

(30) Priorität: 21.05.2008 DE 102008001918
(43) Veröffentlichungstag der Anmeldung: 25.11.2009
(73) Patentinhaber: Robert Bosch GmbH, 70442 Stuttgart (DE)
(72) Erfinder: Op't Roodt, Inigo, 3500, Hasselt (BE); De Block, Peter, 3545, Halen (BE)

(56) Entgegenhaltungen:
- DE-A1-102004 019 158

## Beschreibung

### Stand der Technik

Die Erfindung geht von einem Wischblatt nach dem Oberbegriff des Anspruchs 1 aus.

Aus der gattungsgemäßen DE 10 2005 062 462 A1 ist ein Wischblatt mit einem Träger aus Kunststoff bekannt, der zu einer Wischleiste hin zwei einander zugewandte, in Längsrichtung des Wischblatts verlaufende Halteschienen aufweist. Diese bilden einen im Querschnitt annähernd rechteckigen Zwischenraum mit einem Längsspalt und dienen zur Aufnahme einer Rückenleiste der Wischleiste. An dem Träger sind ein Spoiler aus Kunststoff und mindestens eine Federschiene vorgesehen. Diese ist in einem Längskanal des Trägers bzw. des Spoilers angeordnet. Der Träger, der aus einem härteren Werkstoff als der Spoiler hergestellt ist, ist mit diesem über eine Halteschiene formschlüssig verbunden oder wird in einem Mehrstoffextrusionsverfahren mit dem Träger einstückig in einem Arbeitsgang hergestellt. Der Träger steht zusammen mit der Federleiste ein Stück weit über das Ende des Spoilerprofils vor. Der Träger besitzt in Höhe des Längskanals seitliche Stütztleisten mit seitlichen Aussparungen, in die Rastnasen von Endkappen einrasten. Die Endkappen sind auf den Stütztleisten geführt.

Aus der US 7 210 189 B2 ist ein Wischblatt bekannt, bei dem an einem Spoiler eine Halteschiene für eine Wischleiste angeformt ist. Oberhalb der Halteschiene befindet sich ein zentraler Längskanal zur Aufnahme einer Federschiene, die an ihren Enden ein Stück weit über das Spoilerprofil vorsteht. In dem vorstehenden Ende befinden sich Stanzlöcher zum Fixieren von Endkappen.

Ferner ist aus der DE 10 2006 020 524 A1 ein Wischblatt bekannt, das in einer Kopfleiste seiner Wischleiste einen Längskanal für eine Federschiene aufweist. Die Kopfleiste und die Federschiene werden seitlich und von unten von Halteschienen des Spoilers umfasst. An den Enden des Wischblatts sind Endkappen aufgesetzt. Von diesen kann mindestens eine entfallen, wenn sie durch ein am Spoiler angeformtes Endstück ersetzt wird.

Weiterer Stand der Technik ist aus der gattungsgemäßen DE 10 2004 019158 A1 bekannt.

### Offenbarung der Erfindung

Nach der Erfindung bildet das Führungsteil mit einem vom Führungsteil lösbaren Kappenspoiler die Endkappe, wobei eine Trennfläche zwischen dem Führungsteil und dem Kappenspoiler im Wesentlichen parallel zu einer Breitseite der Federschiene verläuft. Eine so ausgebildete Endkappe ist einfach und kostengünstig in der Herstellung und Montage, wobei das Führungsteil mit dem Kappenspoiler durch eine Klippverbindung miteinander verbunden werden kann. Zweckmäßigerweise weist der Kappenspoiler an seiner dem Führungsteil zugewandten Seite Rasthaken mit Rastnocken auf, die durch Aussparungen im Führungsteil und Aussparungen im Längskanal im montierten Zustand in Aussparungen der Federschiene eingreifen und an der Federschiene oder dem Führungsteil verrasten. Dadurch wird eine vereinfachte Verbindung zwischen dem Führungsteil und dem Kappenspoiler erreicht. Außerdem fixieren die Rasthaken sowohl den Kappenspoiler und die Endkappe als auch den Längskanal und die Federschiene zueinander, indem sie wie Riegel durch die Aussparungen geschoben werden.

Die Montage des Kappenspoilers kann dadurch erleichtert werden, dass die Rastnocken entgegengesetzt zu einer zweiten Montagerichtung geneigte Schrägen besitzen, die mit Schrägen an zugeordneten Rastnasen des Führungsteils bei der Montage zusammenwirken, wobei die Rastnocken am Ende der Montage die Rastnasen hintergreifen. Die Schrägen lenken die Rasthaken in Längsrichtung des Führungsteils aus. Die Rasthaken federn elastisch zurück, sobald die Rastnocken die Rastnasen passiert haben. Dabei ist es zweckmäßig, dass die Rastnase an einer Stirnseite einer Rastöffnung des Führungsteils angeordnet ist und der Rastnocken bei der Montage in die Rastöffnung eindringt. Dadurch ist die Spoilerkappe quer zur Längsrichtung des Wischblatts gesichert. Außerdem kann die Montagebewegung durch eine Stufe an den Rasthaken begrenzt werden, die mit einer Anschlagfläche am Führungsteil zusammenwirkt.

Die Spoilerkappe ist als Zulieferteil durch mindestens einen Verbindungsfilm mit dem Führungsteil verbunden. Dieser wird während der Montage getrennt, wenn die Spoilerkappe quer zum Führungsteil in die Aussparung des Führungsteils und der Federschiene gedrückt wird. Der Verbindungsfilm wird beim Spritzgießen der Spoilerkappe zusammen mit dem Führungsteil hergestellt und zweckmäßig an dem Führungsteil in Montagerichtung am Anfang der Aussparung und an der Spoilerkappe am Ende der Schrägen des Rastnockens vorgesehen.

Für einen harmonischen Übergang zwischen dem Führungsteil und der Spoilerkappe ist es zweckmäßig, dass das Führungsteil am Rand seiner Deckwand mindestens teilweise eine Rinne aufweist, in die ein Überstand an der gegenüberliegenden Seite der Spoilerkappe eingreift. Der Überstand und die Rinne können so ausgebildet sein, dass sich eine Klippverbindung ergibt. Um zu verhindern, dass sich der Kappenspoiler in der Trennfläche zum Führungsteil in Längsrichtung des Wischblatts geringfügig verschieben kann, wird gemäß einer Ausgestaltung der Erfindung vorgeschlagen, dass der Überstand an den Längsseiten des Kappenspoilers eine Lücke hat, in die ein Wulst des Führungsteils passt.

### Kurze Beschreibung der Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

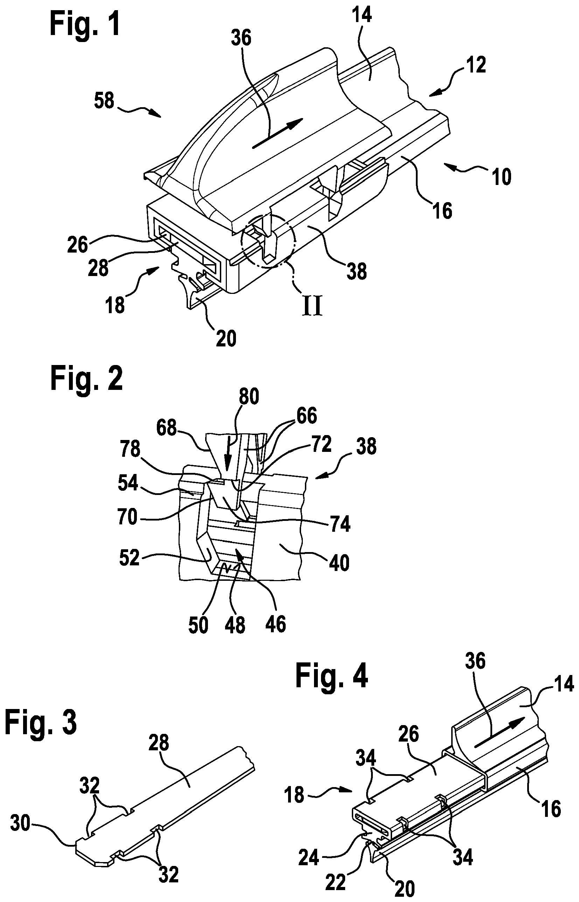

- Fig. 1: eine perspektivische Ansicht eines Endes eines erfindungsgemäßen Wischblatts,
- Fig. 2: eine vergrößerte Seitenansicht entsprechend der Linie II in Fig. 1,
- Fig. 3: eine perspektivische Ansicht eines Endes einer Federschiene,
- Fig. 4: eine perspektivische Ansicht eines Wischblattendes ohne Endkappe,

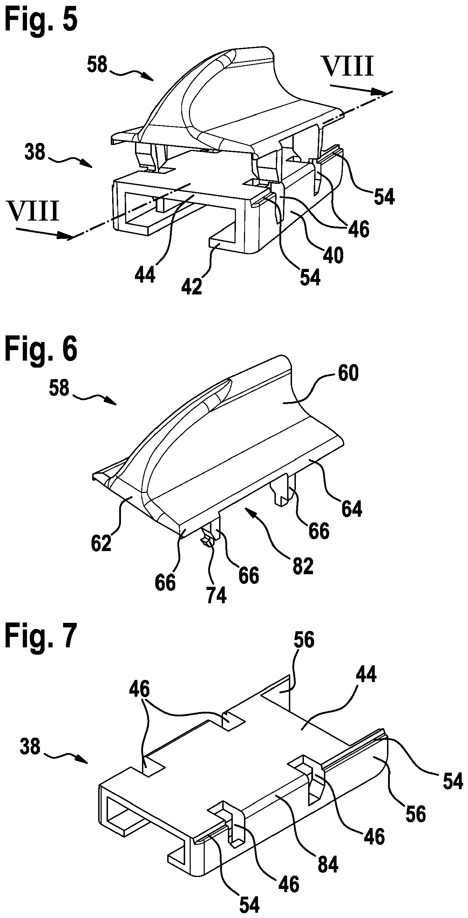

- Fig. 5: eine perspektivische Ansicht einer Endkappe,
- Fig. 6: eine perspektivische Ansicht eines Kappenspoilers,
- Fig. 7: eine perspektivische Ansicht eines Führungsteils,

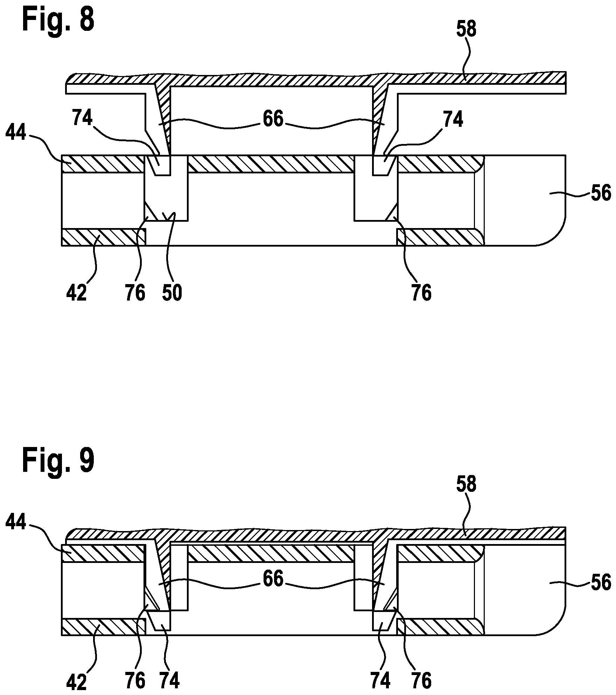

- Fig. 8: einen Schnitt entsprechend der Linie VIII-VIII in Fig. 5 vor der Montage und
- Fig. 9: einen Schnitt entsprechend Fig. 8 im montierten Zustand.

### Ausführungsformen der Erfindung

Ein Wischblatt 10 ist aus einer Wischleiste 18 mit einer Federschiene 28, einem Spoiler 12 sowie Endkappen 38, 58 aufgebaut. Die Wischleiste 18 umfasst eine Wischlippe 20, die über einen Kippsteg 22 mit einer Kopfleiste 24 verbunden ist. An der Kopfleiste 24 schließt sich auf der der Wischlippe 20 abgewandten Seite ein Längskanal 26 an, in dem die Federschiene 28 eingesetzt ist. Zur Erleichterung der Montage besitzt die Federschiene 28 an ihren Enden Montageschrägen 30. Ferner weist sie im Bereich ihrer Enden seitliche Aussparungen 32 auf. Diese sind in montiertem Zustand deckungsgleich mit Aussparungen 34 an den Längsseiten des Längskanals 26.

Der Spoiler 12, der ein Strömungsprofil 14 und eine Halteschiene 16 umfasst, wird mit seiner Halteschiene 16 in einer ersten Montagerichtung 36 in Längsrichtung über den Längskanal 26 der Wischleiste 18 geschoben, sodass der Längskanal 26 mit seinen Aussparungen 34 ein Stück weit mit den Enden aus der Halteschiene 16 vorsteht. Auf jeweils ein Ende wird nun das Führungsteil 38 geschoben, bis seine Aussparungen 46 die Aussparungen 32 der Federschiene 28 und die Aussparungen 34 des Längskanals 26 überdecken. Hierbei umfasst das Führungsteil 38 mit seiner Deckwand 44, seinen Seitenwänden 40 und unteren Schenkeln 42 den Längskanal 26.

Der Kappenspoiler 58 besitzt an der der Deckwand 44 des Führungsteils 38 zugewandten Seite Rasthaken 66 mit Rastnocken 74. Die Rasthaken 66 werden in einer zweiten Montagerichtung 80 quer zur ersten Montagerichtung 36 auf die Wischlippe 20 zu in die Aussparungen 46 des Führungsteils 38 geschoben, wobei die Rasthaken 66 über Schrägen 70, die entgegengesetzt zur zweiten Montagerichtung 80 geneigt sind, und durch Schrägen 52 an den Rastnasen 76 des Führungsteils 38 elastisch ausgelenkt, sodass die Rastnocken 74 und die Rastnasen 76 am Ende des Montagewegs miteinander verrasten. Die Rasthaken 66 durchdringen die Aussparungen 34 des Längskanals 26. Wenn der Werkstoff des Längskanals 26 ausreichend elastisch ist, können die Aussparungen 34 entfallen. In diesem Fall wird das Material des Längskanals 26 durch die Rastnocken 74 entsprechend verformt und durch die Aussparungen 32 der Federschiene 28 gedrückt.

Die Schräge 52 der Rastnase 76 liegt nach der Montage an einer Schrägen 68 des Rasthakens 66 an. Die Schräge 68 bildet im Anschluss an den Rastnocken 74 einen keilförmigen Freiraum, in den die Rastnase 76 eingreift. Der Rastnocken 74, der gegenüber dem Rasthaken 66 eine geringere Materialstärke aufweist, dringt gegen Ende der Montage in eine Rastöffnung 48 am Ende der Rastnase 76 und wird in dieser Rastöffnung 48 seitlich geführt. Ferner liegt eine Stufe 72 zwischen dem Rastnocken 74 mit der geringeren Materialstärke und dem Rasthaken 66 mit der größeren Materialstärke an einer Anschlagfläche 50 des Führungsteils 38 an. Die Anschlagfläche 50 begrenzt die Aussparung 46 in der Seitenwand 40 des Führungsteils 38.

Bis zum Beginn der Montage in der zweiten Montagerichtung 80 sind der Kappenspoiler 58 und das Führungsteil 38 unverlierbar durch einen Verbindungsfilm 78 miteinander verbunden. Dieser Verbindungsfilm 78 befindet sich an der äußeren Seite der Deckwand 44 des Führungsteils 38 und der größten Erstreckung der Rastnocken 74 in Längsrichtung, sodass die Rastnocken 74 nur so tief in die Aussparungen 46 des Führungsteils 38 ragen, dass sie die Montage des Führungsteils 38 in der ersten Montagerichtung 36 nicht behindern. Bei der Montage des Kappenspoilers 58 in der zweiten Montagerichtung 80 wird der Verbindungsfilm 78 abgeschert.

Das Führungsteil 38 besitzt an seinen Längskanten an der Deckwand 44 Rinnen 54, in die entsprechende Überstände 64 des Kappenspoilers 58 eingreifen, sodass die Außenkontur des Kappenspoilers 58 bündig oder mit einer Zierwulst mit den Seitenwänden 40 des Führungsteils 38 abschließen. Die Rinnen 54 und die Überstände 64 können als Klippverbindungen ausgebildet sein. Ferner werden die Rinnen 54 auf jeder Längsseite durch Wülste 84 unterbrochen, die in entsprechende Lücken 82 des entsprechenden Überstands 64 passen. Dadurch wird eine genaue Zentrierung zwischen dem Kappenspoiler 58 und dem Führungsteil 38 erreicht. In montiertem Zustand schließt sich das Führungsteil 38 harmonisch an die Halteschiene 16 des Spoilers 12 an, indem Verlängerungen 56 der Seitenwände 40 die Halteschiene 16 seitlich überlappen, während ein entsprechendes Teil eines Strömungsprofils 60 des Kappenspoilers 58 über das Strömungsprofil 14 des Spoilers 12 ragt. An der dem Spoiler 12 abgewandten Stirnseite 62 kann der Kappenspoiler 58 ein Stück weit über die Stirnseite des Führungsteils 38 und/oder des Längskanals 26 gezogen sein.

## Patentansprüche

1. Wischblatt (10) mit einer Wischleiste (18), einem Spoiler (12) und mindestens einer in einem Längskanal (26) angeordneten Federschiene (28), die zusammen mit dem Längskanal (26) mindestens mit einem Ende ein Stück weit über ein Strömungsprofil (14) des Spoilers (12) vorsteht und in ein Führungsteil (38) einer Endkappe (38, 58) reicht und von dem Führungsteil (38) seitlich umfasst wird, **dadurch gekennzeichnet, dass** das Führungsteil (38) mit einem vom Führungsteil (38) lösbaren Kappenspoiler (58) die Endkappe (38, 58) bildet, wobei eine Trennfläche zwischen dem Führungsteil (38) und dem Kappenspoiler (58) im Wesentlichen parallel zu einer Breitseite der Federschiene (26) verläuft.

2. Wischblatt (10) nach Anspruch 1, **dadurch gekennzeichnet, dass** der Kappenspoiler (58) an seiner dem Führungsteil (38) zugewandten Seite Rasthaken (66) mit Rastnocken (74) aufweist, die im montierten Zustand in Aussparungen (32) der Federschiene (28) eingreifen und an der Federschiene (28) oder dem Führungsteil (38) verrasten und wobei insbesondere eine erste Montagerichtung (36) in Längsrichtung der Wischleiste (18) verläuft.

3. Wischblatt (10) nach Anspruch 2, **dadurch gekennzeichnet, dass** die Rastnocken (74) entgegengesetzt zu einer zweiten Montagerichtung (80) geneigte Schrägen (70) besitzen, die mit Schrägen (52) an zugeordneten Rastnasen (76) des Führungsteils (38) bei der Montage zusammenwirken, wobei die Rastnocken (74) am Ende der Montage die Rastnasen (76) hintergreifen und insbesondere die zweite Montagerichtung 80 quer zur ersten Montagerichtung 36 verläuft.

4. Wischblatt (10) nach Anspruch 3, **dadurch gekennzeichnet, dass** die Rastnase (76) an einer Stirnseite einer Rastöffnung (48) des Führungsteils (38) angeordnet ist und der Rastnocken (74) bei der Montage in die Rastöffnung (48) eindringt.

5. Wischblatt (10) nach einem der Ansprüche 2 bis 4, **dadurch gekennzeichnet, dass** die Rasthaken (66) eine Stufe (72) besitzen, die in der zweiten Montagerichtung (80) des Kappenspoilers (58) mit einer Anschlagfläche (50) des Führungsteils (38) die Montagebewegung begrenzt.

6. Wischblatt (10) nach einem der vorhergehenden Ansprüche, **dadurch gekennzeichnet, dass** vor der Montage das Führungsteil (38) mit dem Kappenspoiler (58) durch mindestens einen Verbindungsfilm (78) verbunden ist, der während der Montage getrennt wird.

7. Wischblatt (10) nach Anspruch 6, **dadurch gekennzeichnet, dass** der Verbindungsfilm (78) an dem Führungsteil (38) in der zweiten Montagerichtung (80) am Anfang der Aussparung (46) und an dem Kappenspoiler (58) am Ende der Schrägen (70) des Rastnockens (74) vorgesehen ist.

8. Wischblatt (10) nach einem der vorhergehenden Ansprüche, **dadurch gekennzeichnet, dass** das Führungsteil (38) am Rand seiner Deckwand (44) mindestens teilweise eine Rinne (54) aufweist, in die ein Überstand (64) an der gegenüberliegenden Seite des Kappenspoilers (58) eingreift.

9. Wischblatt (10) nach Anspruch 8, **dadurch gekennzeichnet, dass** der Überstand (64) an den Längsseiten des Kappenspoilers (58) eine Lücke (82) hat, in die ein Wulst (84) des Führungsteils (38) passt.

## Claims

1. Wiper blade (10) with a wiper strip (18), a spoiler (12) and at least one spring rail (28) which is arranged in a longitudinal channel (26), protrudes together with the longitudinal channel (26) at least at one end for a distance over a flow profile (14) of the spoiler (12) and reaches into a guide part (38) of an end cap (38, 58) and is surrounded laterally by the guide part (38), **characterized in that** the guide part (38) together with a cap spoiler (58) which is detachable from the guide part (38) forms the end cap (38, 58), wherein a separating surface between the guide part (38) and the cap spoiler (58) runs substantially parallel to a wide side of the spring rail (26).

2. Wiper blade (10) according to Claim 1, **characterized in that** the side of the cap spoiler (58) that faces the guide part (38) has latching hooks (66) with latching cams (74) which, in the mounted state, engage in recesses (32) of the spring rail (28) and latch to the spring rail (28) or to the guide part (38), and wherein in particular a first installation direction (36) runs in the longitudinal direction of the wiper strip (18).

3. Wiper blade (10) according to Claim 2, **characterized in that** the latching cams (74) have bevels (70) which are inclined counter to a second installation direction (80) and interact during the installation with bevels (52) on associated latching lugs (76) of the guide part (38), wherein the latching cams (74) engage behind the latching lugs (76) at the end of the installation, and in particular the second installation direction (80) runs transversely with respect to the first installation direction (36).

4. Wiper blade (10) according to Claim 3, **characterized in that** the latching lug (76) is arranged on an end side of a latching opening (48) of the guide part (38), and the latching cam (74) penetrates the latching opening (48) during the installation.

5. Wiper blade (10) according to one of Claims 2 to 4, **characterized in that** the latching hooks (66) have a step (72) which, with a stop surface (50) of the guide part (38), limits the installation movement in the second installation direction (80) of the cap spoiler (58).

6. Wiper blade (10) according to one of the preceding claims, **characterized in that**, prior to the installation, the guide part (38) is connected to the cap spoiler (58) by at least one connecting film (78) which is severed during the installation.

7. Wiper blade (10) according to Claim 6, **characterized in that** the connecting film (78) is provided on the guide part (38) in the second installation direction (80) at the start of the recess (46) and on the cap spoiler (58) at the end of the bevels (70) of the latching cam (74).

8. Wiper blade (10) according to one of the preceding claims, **characterized in that** at least part of the guide part (38) has, at the edge of its top wall (44), a groove (54) in which a projecting length (64) on the opposite side of the cap spoiler (58) engages.

9. Wiper blade (10) according to Claim 8, **characterized in that** the projecting length (64) has, on the longitudinal sides of the cap spoiler (58), a gap (82) into which a bead (84) of the guide part (38) fits.

## Revendications

1. Balai d'essuie-glace (10) comprenant une lame d'essuie-glace (18), un déflecteur (12) et au moins un rail à ressort (28) qui est disposé dans un canal longitudinal (26), qui fait saillie, conjointement avec le canal longitudinal (26), par au moins une extrémité, partiellement au-dessus d'un profilé d'écoulement (14) du déflecteur (12), qui s'étend jusque dans un élément de guidage (38) d'un chapeau d'extrémité (38, 58) et qui est entouré latéralement par l'élément de guidage (38), **caractérisé en ce que** l'élément de guidage (38) forme avec un chapeau déflecteur (58) amovible de l'élément de guidage (38) le chapeau d'extrémité (38, 58), une surface de séparation s'étendant entre l'élément de guidage (38) et le déflecteur (58) sensiblement parallèlement à un côté large du rail à ressort (26).

2. Balai d'essuie-glace (10) selon la revendication 1, **caractérisé en ce que** le chapeau déflecteur (58) comporte sur son côté dirigé vers l'élément de guidage (38) des. crochets d'encliquetage (66) pourvus de taquets d'encliquetage (74) qui s'engagent à l'état monté dans des évidements (32) du rail à ressort (28) et qui s'encliquètent sur le rail à ressort (28) ou l'élément de guidage (38), une première direction de montage (36) s'étendant en particulier dans la direction longitudinale de la lame d'essuie-glace (18).

3. Balai d'essuie-glace (10) selon la revendication 2, **caractérisé en ce que** les taquets d'encliquetage (74) présentent des biseaux (70) qui sont inclinés à l'opposé d'une deuxième direction de montage (80) et qui coopèrent avec des biseaux (52) situés au niveau d'ergots d'encliquetage (76) de l'élément de guidage (38) lors du montage, les taquets d'encliquetage (74) s'engageant à la fin du montage en arrière des ergots d'encliquetage (76) et en particulier la deuxième direction de montage (80) s'étendant transversalement à la première direction de montage (36).

4. Balai d'essuie-glace (10) selon la revendication 3, **caractérisé en ce que** l'ergot d'encliquetage (76) est disposé sur une face d'extrémité d'une ouverture d'encliquetage (48) de l'élément de guidage (38) et **en ce que** le taquet d'encliquetage (74) pénètre dans l'ouverture d'encliquetage (48) lors du montage.

5. Balai d'essuie-glace (10) selon l'une des revendications 2 à 4, **caractérisé en ce que** les crochets d'accrochage (66) comportent un épaulement (72) qui limite le mouvement de montage dans la deuxième direction de montage (80) du chapeau déflecteur (58) au moyen d'une surface de butée (50) de l'élément de guidage (38).

6. Balai d'essuie-glace (10) selon l'une des revendications précédentes, **caractérisé en ce que**, avant le montage, l'élément de guidage (38) est relié au chapeau déflecteur (58) par au moins un film de liaison (78) qui est séparé lors du montage.

7. Balai d'essuie-glace (10) selon la revendication 6, **caractérisé en ce que** le film de liaison (78) est prévu au niveau de l'élément de guidage (38) dans la deuxième direction de montage (80) au début de l'évidement (46) et au niveau du chapeau déflecteur (58) à l'extrémité des biseaux (70) du taquet d'encliquetage (74).

8. Balai d'essuie-glace (10) selon l'une des revendications précédentes, **caractérisé en ce que** l'élément de guidage (38) comporte au bord de sa paroi supérieure (44) au moins partiellement une gorge (54) dans laquelle s'engage une projection (64) du côté opposé du chapeau déflecteur (58).

9. Balai d'essuie-glace (10) selon la revendication 8, **caractérisé en ce que** la projection (64) comporte au niveau des côtés longitudinaux du chapeau déflecteur (58) un intervalle (82) dans lequel s'insère un renflement (84) de l'élément de guidage (38).
